**Europäisches Patentamt**

**European Patent Office**

**Office européen des brevets**

(19)

(11) Veröffentlichungsnummer: **0 229 945 B1**

(12) **EUROPÄISCHE PATENTSCHRIFT**

(45) Veröffentlichungstag der Patentschrift: **20.03.91**

(51) Int. Cl.⁵: **G01N 27/416**

(21) Anmeldenummer: **86116678.3**

(22) Anmeldetag: **01.12.86**

(54) **Sonde mit auswechselbarem Messeinsatz.**

(30) Priorität: **13.12.85 DE 3544161**

(43) Veröffentlichungstag der Anmeldung:
**29.07.87 Patentblatt 87/31**

(45) Bekanntmachung des Hinweises auf die
Patenterteilung:
**20.03.91 Patentblatt 91/12**

(84) Benannte Vertragsstaaten:
**AT BE CH DE ES FR GB GR IT LI LU NL SE**

(56) Entgegenhaltungen:
**DE-A- 2 007 074       DE-A- 2 350 485**
**DE-A- 2 817 350       FR-A- 1 496 461**
**FR-A- 2 242 564       FR-A- 2 387 449**

(73) Patentinhaber: **INTERATOM Gesellschaft mit
beschränkter Haftung
Friedrich-Ebert-Strasse
W-5060 Bergisch-Gladbach 1(DE)**

Patentinhaber: **ENOTEC Ingenieur-Büro für
Energieoptimierung und Umwelttechnik
GmbH
Höher Birken 6 Industriegebiet Rodt
W-5277 Marienheide(DE)**

(72) Erfinder: **Reck, Alfred, Dipl.-Ing.
Kollenbacher Strasse 3a
W-5067 Kürten 4(DE)**
Erfinder: **Jung, Jürgen, Dr.
Barbarastrasse 3
W-5060 Bergisch Gladbach 1(DE)**
Erfinder: **Gumprecht, Horst-Fred
Fasanenweg 9
W-5270 Gummersbach(DE)**

(74) Vertreter: **Fuchs, Franz-Josef, Dr.-Ing. et al
Postfach 22 13 17
W-8000 München 22(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft eine Sonde mit auswechselbarem Meßeinsatz. Die erste der Anmelderinnen hat in der DE-C-23 50 485 ein elektrochemisches Meßgerät zur kontinuierlichen Bestimmung der Sauerstoffaktivität in aggressiven Medien beschrieben, bei der ein Tiegel aus einem Festelektrolyten in das Ende eines rohrförmigen, metallischen Sondenkörpers eingelötet ist. Im unteren Temperaturbereich sind auch geklebte Verbindungen zwischen dem Sondenrohr und dem Meßkörper mit gutem Erfolg eingesetzt worden. Lot und Kleber sind jedoch nicht temperaturbeständig genug, um bei höheren Temperaturen eingesetzt zu werden, z. B. bei Sauerstoffmessungen in Feuerungsräumen; hier und auch in anderen Anwendungsfällen kommt noch die Beanspruchung durch in der Umgebung vorhandene korrosive Stoffe hinzu. Als ausreichend temperaturfester sowie Sauerstoff-Ionen leitender Festelektrolyt ist Zirkonoxid bekannt, das z. B. mit Yttriumoxid dotiert ist. Die Erfindung wird im folgenden anhand der bevorzugten Anwendung auf Sauerstoffmeßsonden der beschriebenen Art dargestellt, ist jedoch nicht auf diese beschränkt.

Statt der wie dargelegt bei höheren Temperaturen nicht einzusetzenden stoffschlüssigen Verbindung zwischen dem Sondenkörper und dem Meßkörper muß eine formschlüssige Verbindung eingesetzt werden, derart, daß der Meßkörper in das eine Ende des rohrförmigen Sondenkörpers eingesetzt wird, sich dort an einer zu diesem Zwecke vorgesehenen Schulter abstützt und durch eine auf den Sondenkörper aufgesetzte Kappe in seiner Lage gehalten wird. Eine Ausbildung der Kappe zum Anschrauben würde eine leichte Auswechselbarkeit des Meßkörpers gestatten, stößt jedoch bei hohen Temperaturen auf Schwierigkeiten durch den Umstand, daß Sondenkörper und Kappe (die zweckmäßigerweise aus dem gleichen Werkstoff hergestellt sind) dazu neigen, miteinander zu verschweißen.

Die Abdichtung des Meßkörpers gegenüber dem Sondenkörper erfolgt bei den in Aussicht genommenen hohen Temperaturen durch hochtemperaturbeständige Metalldichtungen (z. B. aus Platin), wobei die Dichtwirkung durch keramische Kitte unterstützt werden kann. Es hat sich nun gezeigt, daß die linearen Wärmeausdehnungskoeffizienten der für die Meßkörper geeigneten Werkstoffe so unterschiedlich sind, daß die Dichtungen bei einem Durchfahren der Rampe zwischen Raum- und Betriebstemperatur über den elastischen Bereich hinaus beansprucht und plastisch verformt werden, wonach sie ihre Dichtwirkung allmählich verlieren.

Aufgabe der vorliegenden Erfindung ist eine Sonde mit auswechselbarem Meßeinsatz, die bei hoher Temperaturbeständigkeit gegen aggressive Medien so ausgebildet ist, daß die Dichtungen zwischen Meß- und Sondenkörper auch nach mehrmaligem Temperaturwechsel ihre Dichtwirkung nicht verlieren. Der Meßkörper soll leicht auswechselbar sein, ohne daß hierzu Schneidarbeiten notwendig würden.

Die Lösung dieser Aufgabe erfolgt durch den im 1. Anspruch angegebenen Ausgleichskörper. Durch die Verwendung eines Ausgleichskörpers kann der Unterschied in der Wärmedehnung zwischen dem Meß- und Sondenkörper einschließlich dessen Kappe so ausgeglichen werden, daß die Dichtungen nicht durch Temperaturwechselbelastungen zusätzlich deformiert werden, wenn die axialen Abmessungen und der Ausdehnungskoeffizient des Ausgleichskörpers derart abgestimmt sind, daß die Summe der Ausdehnung von Meß- und Ausgleichskörper sowie den Dichtungen gleich ist der Ausdehnung des Sondenkörpers über die gleiche Länge.

Die im 2. und 3. Anspruch vorgeschlagenen Ausgestaltungen der Erfindung sind dazu geeignet, in weiter unten erläuterter Weise auch in radialer Richtung einen Ausgleich der unterschiedlichen Wärmedehnungen zu bewirken, so daß die Dichtungen zwischen den verschiedenen Bauteilen dadurch nicht beansprucht werden.

Für die Befestigung der Kappe auf dem Sondenkörper wird eine Schraubverbindung vorgesehen, da diese eine leichte Auswechselbarkeit des Meßkörpers ermöglicht.

Für den Einsatz bei hohen Temperaturen und in besonders aggressiven Medien wird hierfür im 5. Anspruch vorgeschlagen, das Gewinde von Sondenkörper und/oder Kappe mit einer Diffusionssperre, z. B. aus Nickel oder Platin zu versehen.

Im 6. Anspruch wird eine bevorzugte Werkstoffwahl für Sondenkörper und Kappe bezeichnet. Die hier vorgeschlagene Metallkeramik weist gegenüber Metall einerseits und Keramik andererseits erhöhte Temperatur- und Korrosionsbeständigkeit auf und ist auch elektrisch leitend. Sie weist einen linearen Wärmeausdehnungskoeffizienten von $\alpha_1 = 4{,}1 \cdot 10^{-6}$ K$^{-1}$ auf.

Nach dem 7. Anspruch wird als Dichtungsmaterial Platin mit dem linearen Ausdehnungskoeffizienten $\alpha_2 = 9{,}07 \cdot 10^{-6}$ K$^{-1}$ vorgeschlagen, dessen Dichtungswirkung gemäß dem 8. Anspruch durch die zusätzliche Verwendung eines keramischen Kittes verbessert werden kann. Für den besonderen Fall der Verwendung in einer Sonde zur Sauerstoffmessung wird gemäß dem 9. Anspruch für den Meßkörper die Verwendung von Zirkonoxid mit einem linearen Wärmeausdehnungskoeffizienten $\alpha_3 = 11{,}2 \cdot 10^{-6}$ K$^{-1}$ vorgeschlagen.

Entsprechend dem 10. Anspruch kann der Ausgleichskörper aus Siliziumnitrid mit einem linearen Wärmeausdehnungskoeffizienten $\alpha_4 = 3{,}0 \cdot 10^{-6} \ K^{-1}$ gefertigt sein.

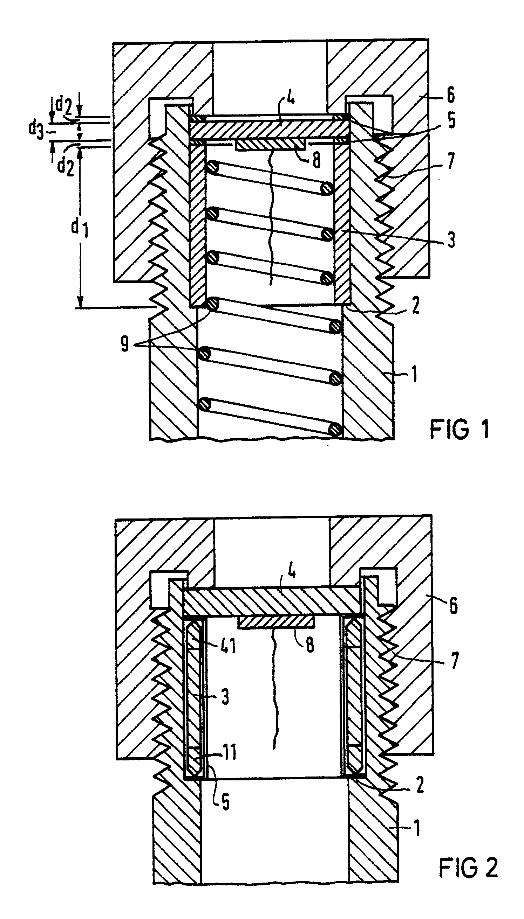

Zwei Ausführungsbeispiele der Erfindung sind im Längsaxialschnitt in der Zeichnung dargestellt. Im Beispiel der Fig. 1 weist ein rohrförmiger, aus siliziuminfiltriertem Siliziumcarbid SiSiC bestehender Sondenkörper 1 an seinem einen Ende eine Schulter 2 auf, auf der sich ein Ausgleichskörper 3 aus Siliziumnitrid $Si_3N_4$ der Länge $d_1$ abstützt. Auf diesem wiederum liegt, durch eine ringförmige Platindichtung 5 getrennt ein Meßkörper 4 der Dicke $d_3$ aus Zirkonoxid $ZrO_2$ auf, das mit Yttriumoxid $Y_2O_3$ stabilisiert ist. Der Meßkörper 4 wird durch eine Kappe 6 festgehalten, die aus dem gleichen Werkstoff wie der Sondenkörper 1 hergestellt und auf diesen aufgeschraubt ist; zwischen Kappe 6 und Meßkörper 4 ist eine weitere Dichtung 5 angeordnet. Das Gewinde des Sondenkörpers 1 und/oder das der Kappe 6 ist mit einer z. B. aufgedampften Diffusionssperre 7 aus Platin versehen, die ein Verschweißen der beiden Teile sicher verhindert, so daß die Kappe jederzeit wieder abgeschraubt und der Meßkörper 4 ausgewechselt werden kann. Das elektrische Potential des Meßkörpers 4 wird einmal direkt über die Dichtungen 5 und den Sondenkörper 1 abgenommen und zweitens über eine an der Innenseite des Meßkörpers 4 angebrachte Elektrode 8. Ferner kann eine elektrische Beheizung 9 vorhanden sein, die dem Meßkörper 4 die zu seinem Betrieb erforderliche Temperatur mitteilt, wenn dies nicht bereits durch die Umgebungsverhältnisse gewährleistet ist. Bei dieser Sonde erfolgt ein axialer Ausgleich der verschiedenen Ausdehnungen.

Bei dem in der Fig. 2 dargestellten, weiterentwickelten Ausführungsbeispiel werden auch die in radialer Richtung unterschiedlichen Dehnungen ausgeglichen. Bei gleichbleibenden Bezeichnungen für die funktionell mit denjenigen der Fig. 1 übereinstimmenden Teile sind hier zwei zusätzliche Körper vorhanden: ein erster Dichtkörper 11 aus dem gleichen Werkstoff wie der Sondenkörper 1, der zwischen diesem und dem Ausgleichskörper 3 angeordnet ist, und ein zweiter Dichtkörper 41 aus dem gleichen Werkstoff wie der Meßkörper 4, der zwischen diesem und dem Ausgleichskörper 3 angeordnet ist. Die Dichtkörper 11, 41 sind mit Schneiden versehen, mit denen sie sich in umgebördelte Ränder der hier einzigen Dichtung 5 aus z. B. weichgeglühtem Platin eindrücken und diese gegen den Sondenkörper 1 bzw. den Meßkörper 4 drücken. Da die Körper 1 und 11 einerseits, und 4 und 41 andererseits sich radial jeweils um das gleiche Maß ausdehnen, wird die Dichtung 5 nicht beansprucht. Der Ausgleich der Dehnungen erfolgt durch ein radiales Verschieben der aufeinanderliegenden Stirnflächen des ersten Dichtkörpers 11 bzw. des zweiten Dichtkörpers 41 jeweils gegenüber der anliegenden Stirnfläche des Ausgleichskörpers 3. Die entsprechenden Stirnflächen sind zur Erleichterung der gegenseitigen Gleitbewegung z. B. geläppt. Sie liegen außerhalb des durch die Dichtung 5 verschlossenen Raumes und haben so keine Dichtfunktion.

## Ansprüche

1. "Sonde mit einem rohrförmigen Sondenkörper (1) in dessen eines Ende ein Meßkörper (4) eingesetzt ist, welcher sich unter Zwischenschaltung mindestens einer Dichtung (5) über einen Ausgleichskörper (3) auf eine im Inneren des Sondenkörpers (1) angebrachte Schulter (2) abstützt und der in seiner Lage durch eine am genannten Ende auf den Sondenkörper (1) aufgesetzte Kappe (6) gehalten wird, wobei der Sondenkörper (1) aus einem ersten Werkstoff mit dem linearen Wärmeausdehnungskoeffizienten $\alpha_1$, die Dichtung (5) aus einem zweiten Werkstoff mit dem Ausdehnungskoeffizienten $\alpha_2$, der Meßkörper (4) aus einem dritten Werkstoff mit dem Ausdehnungskoeffizienten $\alpha_3$ und der Ausgleichskörper (3) aus einem vierten Werkstoff mit dem Ausdehnungskoeffizienten $\alpha_4$ besteht und die Abmessuns der Dichtung (5), in Längsrichtung des Sondenkörpers (1) $d_2$, die des Meßkörpers (4) $d_3$ und die des Ausgleichskörpers (3) $d_1$ beträgt, derart daß

$$\frac{d_1 \cdot \alpha_4 + d_2 \cdot \alpha_2 + d_3 \cdot \alpha_3}{(d_1 + d_2 + d_3) \cdot \alpha_1}$$

ist."

2. "Sonde nach Anspruch 1, **dadurch gekennzeichnet,** daß zwischen der Schulter (2) des Sondenkörpers (1) und dem Ausgleichskörper (3) ein erster Dichtkörper (11) aus demselben Werkstoff wie der Sondenkörper (1) in radial gleitfähiger Anordnung zum Ausgleichskörper (3) und die Dichtung (5) zwischen der Schulter (2) des Sondenkörpers (1) und dem ersten Dichtkörper (11) angeordnet ist."

3. Sonde nach Anspruch 1 oder 2, **dadurch gekennzeichnet**, daß zwischen Meßkörper (4) und Ausgleichskörper (3) ein zweiter Dichtkörper (41) aus demselben Werkstoff wie der Sondenkörper (3) und die Dichtung (5) zwischen dem Meßkörper (4) und dem zweiten Dichtkörper (41) angeordnet ist.

4. Sonde nach Anspruch 2 oder 3, **dadurch gekennzeichnet**, daß die Dichtkörper (11, 41) an den mit der Dichtung (5) in Kontakt stehenden Enden mit Schneiden versehen sind.

5. Sonde nach Anspruch 1 bis 3 mit einer mittels Gewinde auf den Sondenkörper aufgeschraubten Kappe, **dadurch gekennzeichnet**, daß das Gewinde mit einer Diffusionssperre (7) versehen ist.

6. Sonde nach Anspruch 1 bis 3, **dadurch gekennzeichnet**, daß als erster Werkstoff siliziuminfiltriertes Siliziumcarbid SiSiC verwendet wird.

7. Sonde nach Anspruch 1 bis 3, **dadurch gekennzeichnet**, daß als zweiter Werkstoff Platin Pt verwendet wird.

8. Sonde nach Anspruch 7, **dadurch gekennzeichnet**, daß das Platin in keramischen Kitt eingebettet ist.

9. Sonde nach Anspruch 1 bis 3 zur Messung der Sauerstoffkonzentration, **dadurch gekennzeichnet**, daß als dritter Werkstoff stabilisiertes, Sauerstoff-Ionen leitendes Zirkonoxid $ZrO_2$ verwendet wird.

10. Sonde nach Anspruch 1 bis 3, **dadurch gekennzeichnet**, daß als vierter Werkstoff Siliziumnitrid $Si_3N_4$ verwendet wird.

## Claims

1. Probe having a tubular probe body (1), into one end of which there is inserted a measuring body (4) which is supported with interposition of at least one seal (5) by way of a compensating body (3) on a shoulder (2) provided in the interior of the probe body (1) and which is held in its position by means of a cap (6) placed upon the probe body (1) at said end, with the probe body (1) consisting of a first material with the linear coefficient of thermal expansion $\propto_1$, the seal (5) consisting of a second material with the coefficient of expansion $\propto_2$, the measuring body (4) consisting of a third material with the coefficient of expansion $\propto_3$ and the compensating body (3) consisting of a fourth material with the coefficient of expansion $\propto_4$ and the dimension of the seal (5), in the longitudinal direction of the probe body (1), amounting to $d_2$, that of the measuring body (4) amounting to $d_3$ and that of the compensating body (3) amounting to $d_1$ such that

$$d_1 \cdot \propto_4 + d_2 \cdot \propto_2 + d_3 \cdot \propto_3 = $$

$$(d_1 + d_2 + d_3) \cdot \propto_1.$$

2. Probe according to claim 1, characterised in that a first sealing body (11) consisting of the same material as the probe body (1) in radially slidable arrangement in relation to the compensating body (3) is arranged between the shoulder (2) of the probe body (1) and the compensating body (3) and the seal (5) is arranged between the shoulder (2) of the probe body (1) and the first sealing body (11).

3. Probe according to claim 1 or 2, characterised in that a second sealing body (41) consisting of the same material as the probe body (3) (sic) is arranged between measuring body (4) and compensating

4

body (3) and the seal (5) is arranged between the measuring body (4) and the second sealing body (41).

4. Probe according to claim 2 or 3, characterised in that the sealing bodies (11, 41) are provided with lips at the ends which are in contact with the seal (5).

5. Probe according to claim 1 to 3 having a cap which can be screwed onto the probe body by means of a thread, characterised in that the thread is provided with a diffusion barrier (7).

6. Probe according to claim 1 to 3, characterised in that silicon-impregnated silicon carbide SiSiC is used as a first material.

7. Probe according to claim 1 to 3, characterised in that platinum Pt is used as a second material.

8. Probe according to claim 7, characterised in that the platinum is embedded in ceramic cement.

9. Probe according to claim 1 to 3 for measuring the oxygen concentration, characterised in that stabilized, zirconium oxide $ZrO_2$ conducting oxygen ions is used as a third material.

10. Probe according to claim 1 to 3, characterised in that silicon nitride $Si_3N_4$ is used as a fourth material.

**Revendications**

1. Sonde comprenant un corps de sonde (1) tubulaire, à l'une des extrémités duquel est inséré un corps de mesure (4) qui s'appuie, avec interposition d'au moins un joint d'étanchéité (5) et par l'intermédiaire d'un corps de compensation (3), sur un épaulement (2) ménagé à l'intérieur du corps de sonde (1) et qui est maintenu en sa position par un capuchon (6) coiffant à ladite extrémité du corps de sonde (1), le corps de sonde (1) étant en un premier matériau à coefficient de dilatation thermique linéaire $\alpha_1$, le joint d'étanchéité étant en un deuxième matériau à coefficient de dilatation $\alpha_2$, le corps de mesure (4) étant en un troisième matériau à coefficient de dilatation $\alpha_3$ et le corps de compensation (3) étant en un quatrième matériau à coefficient de dilatation $\alpha_4$ et la dimension du joint d'étanchéité (5) dans la direction longitudinale du corps de sonde (1) $d_2$, celle du corps de mesure (4) $d_3$ et celle du corps de compensation (3) $d_1$ étant telles que

$$d_1 \cdot \alpha_4 + d_2 \cdot \alpha_2 + d_3 \cdot \alpha_3 = (d_1 + d_2 + d_3) \cdot \alpha_1.$$

2. Sonde suivant la revendication 1, caractérisée en ce qu'entre l'épaulement (2) du corps de sonde (1) et le corps de compensation (3) est interposé un premier corps d'étanchéité (11) en le même matériau que le corps de sonde (1) avec possibilité de glissement radial par rapport au corps de compensation (3), et le joint d'étanchéité (5) est interposé entre l'épaulement (2) du corps de sonde (1) et le premier corps d'étanchéité (11).

3. Sonde selon la revendication 1 ou 2, caractérisée en ce que entre le corps de mesure (4) et le corps de compensation (3) est interposé un second corps d'étanchéité (41) en le même matériau que le corps de sonde (3) et le joint d'étanchéité (5) est interposé entre le corps de mesure (4) et le second corps d'étanchéité (41).

4. Sonde suivant la revendication 2 ou 3, caractérisée en ce que les corps d'étanchéité (11,41) sont munis de tranchants sur les extrémités en contact avec le joint d'étanchéité (5).

5. Sonde suivant l'une des revendications 1 à 3 comprenant un capuchon vissé sur le corps de sonde au moyen d'un filetage, caractérisée en ce que le filetage est muni d'une barrière de diffusion (7).

6. Sonde suivant l'une des revendications 1 à 3, caractérisée en ce que du carbure de silicium infiltré de silicium SiSiC est utilisé comme premier matériau.

7. Sonde suivant l'une des revendications 1 à 3, caractérisée en ce que du platine Pt est utilisé comme deuxième matériau.

8. Sonde selon la revendication 7, caractérisée en ce que le platine est enrobée de mastic céramique.

9. Sonde suivant l'une des revendications 1 à 3 de mesure de la concentration d'oxygène, caractérisée en ce que de l'oxyde de zirconium $ZrO_2$ conduisant les ions oxygène et stabilisé, est utilisé comme troisième matériau.

10. Sonde suivant l'une des revendications 1 à 3, caractérisée en ce que du nitrure de silicium $Si_3N_4$ est utilisé comme quatrième matériau.

FIG 1

FIG 2